# EUROPÄISCHE PATENTSCHRIFT

(11) **EP 0 958 768 B1**
(45) Veröffentlichungstag und Bekanntmachung des Hinweises auf die Patenterteilung: **04.12.2002**
(21) Anmeldenummer: 99108834.5
(22) Anmeldetag: 04.05.1999
(51) Int. Cl.: A47J 27/092

(54) **Dampfdruckkochtopf mit einem Sicherheitsventil**
Pressure cooker with safety valve
Récipient de cuisson sous pression avec soupape de sécurité

(30) Priorität: 22.05.1998 DE 19822905
(43) Veröffentlichungstag der Anmeldung: 24.11.1999
(73) Patentinhaber: HEINRICH BAUMGARTEN KG SPEZIALFABRIK FÜR BESCHLAGTEILE, 57290 Neunkirchen (DE)
(72) Erfinder: Baumgarten, Gerd-Diethard, 57234 Wilsdorf-Wilden (DE)
(74) Vertreter: Missling, Arne, Dipl.-Ing.

(56) Entgegenhaltungen:
- EP-A- 0 736 282
- WO-A-85/03851
- DE-A- 2 705 712
- DE-A- 3 623 546
- US-A- 4 735 190

## Beschreibung

Die Erfindung betrifft einen Dampfdruckkochtopf gemäß dem Oberbegriff des Anspruches 1.

Aus Sicherheitsgründen ist es notwendig, daß beim Öffnen eines Dampfdruckkochtopfes kein Druckunterschied zwischen dem inneren des Topfes und der äußeren Atmosphäre vorliegt. Bei herkömmlichen Sicherheitseinrichtungen, wie sie aus der DE-PS 36 23 546 bekannt sind, muß ein Entlüftungsvorgang des unter Druck stehenden Topfes eingeleitet werden, bevor der Bajonettverschluß von Topf und Deckel geöffnet werden kann, doch ist es nicht gewährleistet, daß der Druckausgleich beendet ist, bevor der Deckel abgehoben werden kann. Durch zu schnelles Öffnen des Bajonettverschlusses kann dies zu Personenschäden und auch zu Beschädigungen am Bajonettverschluß führen.

Der Erfindung liegt die Aufgabe zugrunde, einen Dampfdruckkochtopf der eingangs genannten Art so auszubilden, daß der Bajonettverschluß nur nach einer weitgehend vollständigen Entlüftung des Topfes geöffnet werden kann.

Diese Aufgabe wird erfindungsgemäß dadurch gelöst daß an dem Betätigungsglied eine Haube befestigt ist, die so geformt ist, daß ihr freies Ende beim Verschwenken mit dem Druckanzeiger des Sicherheitsventils derart zusammenwirkt, daß bei einem Überdruck in dem Topf ein Erreichen der zweiten Entriegelungsposition und damit ein Öffnen des Damfpdruckkochtopfes verhindert ist. Ausgestaltung der Erfindung sind Gegenstand der Unteransprüche 2 bis 9.

Gemäß der Erfindung ist an dem auf dem Deckel gelagerten Betätigungsglied eine Haube angebracht, deren freies Ende sich über dem Druckanzeiger befindet. In dem freien Ende der Haube befindet sich vorteilhaft ein Langloch, das größer ist als der horizontale Querschnitt des oberen Endes des Druckanzeigers. Steht der Topf nach oder während des Kochvorgangs unter Druck, hebt sich der Druckanzeiger aus dem Ventiloberteil und durchstößt das Langloch in der Haube.

Soll der Bajonettverschluß von Topf und Deckel nach dem Kochvorgang entriegelt werden, muß das Betätigungsglied aus der Schließposition in die Entriegelungsposition verschwenkt werden. Dabei schlägt die Haube mit ihrer vom Deckelmittelpunkt innenliegenden Kante an dem wegen des Überdrucks herausragenden Druckanzeiger an und die Entriegelungsposition kann nicht erreicht werden.

Gleichzeitig mit dem Verschwenken des Betätigungsgliedes aus der Schließposition heraus, wird der Ventilkegel von seinem Sitz gehoben, das Sicherheitsventil öffnet und der Überdruck wird abgebaut. Als Folge sinkt der Druckanzeiger nach unten und gibt bei hinreichendem Druckabbau den Weg für ein Fortsetzen des Verschwenkens in die Entriegelungsposition frei.

Erfindungsgemäß wird das Betätigungsglied durch eine mit dem Ventil am Deckel angeschraubte Blattfeder in die Schließposition gebracht. Dazu weist die Blattfeder eine kreisförmige Stanzung auf, durch die das Sicherheitsventil geführt ist.

Gemäß der Erfindung kann die Haube so ausgeformt sein, dass sie das Sicherheitsventil und das Betätigungsglied abdeckt. Die Haube ist durch einen Ansatz des Betätigungsgliedes an diesem befestigt. Eine weitere Befestigung erfolgt an zwei Achsen, die unter und über das Betätigungsglied geführt sind. Diese Haube dient dazu, aus dem Sicherheitsventil austretenden Dampf aufzufangen, um ein Verbrühen des Benutzers zu verhindern. Der Dampf kann durch einen Auslaß aus der Haube in Richtung des Deckelmittelpunktes entweichen.

In der Haube ist eine Dampfsperre angebracht, die ein Eindringen des Dampfes in den vom Deckelmittelpunkt aus hinter der Dampfsperre befindlichen Raum der Haube und somit ein Aufheizen derselben verhindert. Da die Haube in diesem hinteren Bereich als Druckpunkt zum Schwenken des Betätigungsgliedes verwendet wird, ist durch die Dampfsperre gewährleistet, daß der Bediener keine Verbrennungen erleidet.

Ein außen an der Haube angebrachtes Griffstück hat den Vorteil, daß dieses zum einen nur gering temperaturbelastet ist und zum anderen das Verschwenken des Betätigungsgliedes erleichtert.

Ein Ausführungsbeispiel der Erfindung ist im folgenden anhand der Zeichnung näher beschrieben. Darin zeigt
- Abb. 1: einen Schnitt durch einen erfindungsgemäß ausgebildeten Dampfdruckkochtopf 1 in drucklosem Zustand bei verriegeltem Bajonettverschluß
- Abb. 2: einen Schnitt entsprechend Abb. 1 jedoch bei Überdruck
- Abb. 3: einen Schnitt entsprechend Abb. 2 in vergrößerter Darstellung mit in Anschlagposition verschwenktem Betätigungsglied
- Abb. 4: einen Schnitt nach Linie IV und IV in Abb. 1 in vergrößerter Darstellung,
- Abb. 5: eine Draufsicht auf die Sicherheitseinrichtungen des Dampfdruckkochtopfes entsprechend Abb. 1 und
- Abb. 6 und 7: eine Draufsicht bzw. Seitenansicht der Blattfeder.

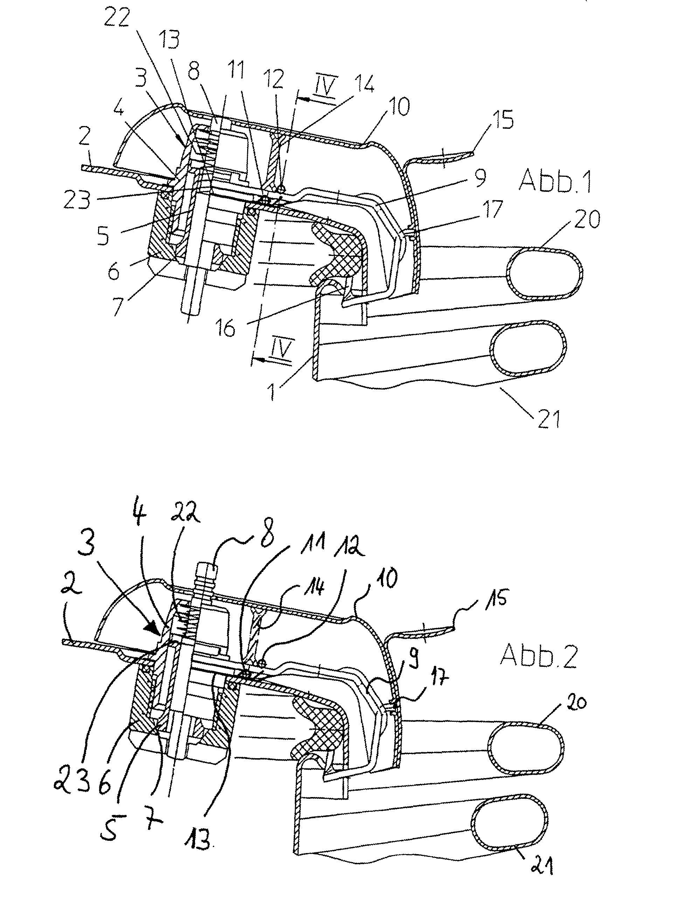

Der in Abb. 1 dargestellte Dampfdruckkochtopf besteht aus einem Topf 1 und einem Deckel 2. Am Topf 1 ist ein Griffteil 21 und am Deckel 2 ein Griffteil 20 angebracht.

Im Deckel 2 ist ein Sicherheitsventil 3 mit integriertem Druckanzeiger 8 in einer Ausprägung 24 eingesetzt. Das Sicherheitsventil 3 besteht aus einem Ventiloberteil 4, das mittels eines Ventilunterteils 6 am Deckel 2 befestigt ist, einem in diesem verschiebbar angeordneten Ventilkegel 5 und einem wiederum in dem Ventilkegel 5 verschiebbar angeordneten Druckanzeiger 8. In der Abb. 1 gezeigten Stellung liegt der Ventilkegel 5 an einem Ventilsitz 7 des Ventilunterteils an, so daß kein Dampf aus dem Inneren des Dampfdruckkochtopf entweichen kann. In dieser Stellung wird der Ventilkegel 5 durch eine Feder 22 gepreßt gehalten. Der Dampfdruckkochtopf ist in der dargestellten Form drucklos, so daß der Druckanzeiger 8 durch eine Feder 23 in eine untere Position gegen das Ventilunterteil 6 gedrückt wird.

Ein Betätigungsglied 9 ist als Wippe ausgebildet und stützt über eine Achse 11 auf dem Deckel 2 ab. Durch seitliche Schlitze in dem Ventiloberteil 4 greift das eine Ende des Betätigungsgliedes 9 in den Ventilkegel 5 ein, so daß beim Verschwenken des Betätigungsgliedes 9 der Ventilkegel 5 von dem Ventilsitz 7 gehoben und das Sicherheitsventil geöffnet wird. Das andere Ende des Betätigungsgliedes 9 greift bei geschlossenem Bajonettverschluß unter den Rand des Deckels 2 und verriegelt mittels eines Verriegelungsansatzes 16 den Bajonettverschluß.

Am Betätigungsglied 9 ist ein weiterer Ansatz 17 angeformt, an dem ein als Haube 10 ausgeformter Ausleger angebracht ist. Diese Haube ist desweiteren über eine obere Achse 12 am Betätigungsglied verrastet. Diese obere Achse 12 und eine untere Achse 11 sind ober- und unterhalb, quer zum Betätigungsglied 9 an diesem befestigt.

Die Blattfeder 13 weist eine Ausnehmung 27 auf. Durch diese ist das Ventiloberteil 4 hindurchgeführt und die Blattfeder 13 wird durch die Verschraubung von Ventiloberteil 4 und Ventilunterteil 6 am Deckel 2 festgehalten. Die Blattfeder 13 ist dann von der Verschraubung aus zur unteren Achse 11 hin und unter der unteren Achse 11 hindurchgeführt. Die Blattfeder 13 ist an ihrem freien Ende dreigeteilt und zwar in zwei äußere hakenförmig gebogene Federbeine 26 a, b und in ein inneres Federbein 25. In den hakenförmigen äußeren Federbeinen ist die Achse 11 verrastet und spielfrei auf dem Deckel 2 gehalten. Das mittlere Federbein 25 der Blattfeder 13 drückt das Betätigungsglied 9 in eine Ruhestellung, die Schließposition, die sich dadurch auszeichnet, daß der Ventilkegel 5 an dem Ventilsitz 7 anliegt und somit das Sicherheitsventil 3 geschlossen ist, und daß der Verriegelungsansatz 16 in dem Bajonettverschluß eingreift und diesen verriegelt.

Die Haube 10 weist über dem Druckanzeiger 8 ein Langloch 18 auf, desweiteren ist an ihr ein Griffstück 15 angebracht, mit dem das Betätigungsglied 9 aus der Ruhestellung gebracht werden kann.

Der vom Deckelmittelpunkt aus hinter einer Dampfsperre 14 befindliche äußere Teil der Haube 10 kann ebenfalls zum Auslenken des Betätigungsgliedes genutzt werden. Um ein Aufheizen der Haube 10 in diesem Bereich und Verbrennungen des Benutzers zu verhindern, ist unter der Haube 10 eine Dampfsperre 14 angebracht, die ein Eindringen von Dampf in den hinter der Dampfsperre 14 befindlichen Raum unter der Haube 10 unterbindet.

Die Abb. 2 zeigt den gleichen Schnitt durch den Dampfdruckkochtopf. In dieser Abbildung ist jedoch der Topf 1 bei Überdruck dargestellt. Dieses läßt sich an dem herausstehenden Druckanzeiger 8 erkennen, der durch den Überdruck im Topf 1 gegen die Feder 23 aus der Stellung am Ventilunterteil 6 gedrückt wird.

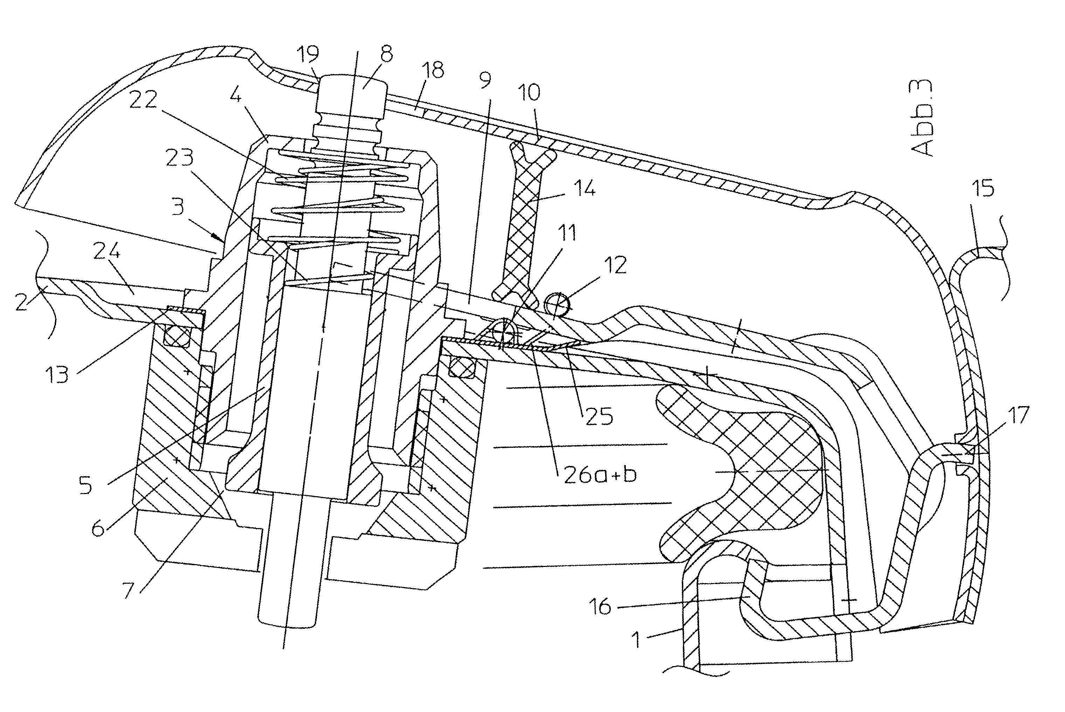

In dem Schnitt von Abb. 3 ist zu erkennen, wie das Betätigungsglied 9 gegen das Federbein 25 der Blattfeder 13 aus der Schließposition verschwenkt ist, wenn der Bajonettverschluß entriegelt werden soll. Dabei schlägt die Lochkante 19 an dem ausgefahrenen Druckanzeiger 8 an und das Erreichen der Entriegelungsposition ist verhindert. Da mit dem Verschwenken des Betätigungsgliedes 9 das Sicherheitsventil 3 geöffnet und ein Druckausgleich eingeleitet wird, sinkt der Druckanzeiger 8 ab. Ist ein hinreichend niedriger Druck erreicht, gibt der Druckanzeiger 8 den Weg für ein weiteres Verschwenken des Betätigungsgliedes 9 frei, so daß schließlich die Entriegelungsposition erreicht wird und der Bajonettverschluß geöffnet werden kann.

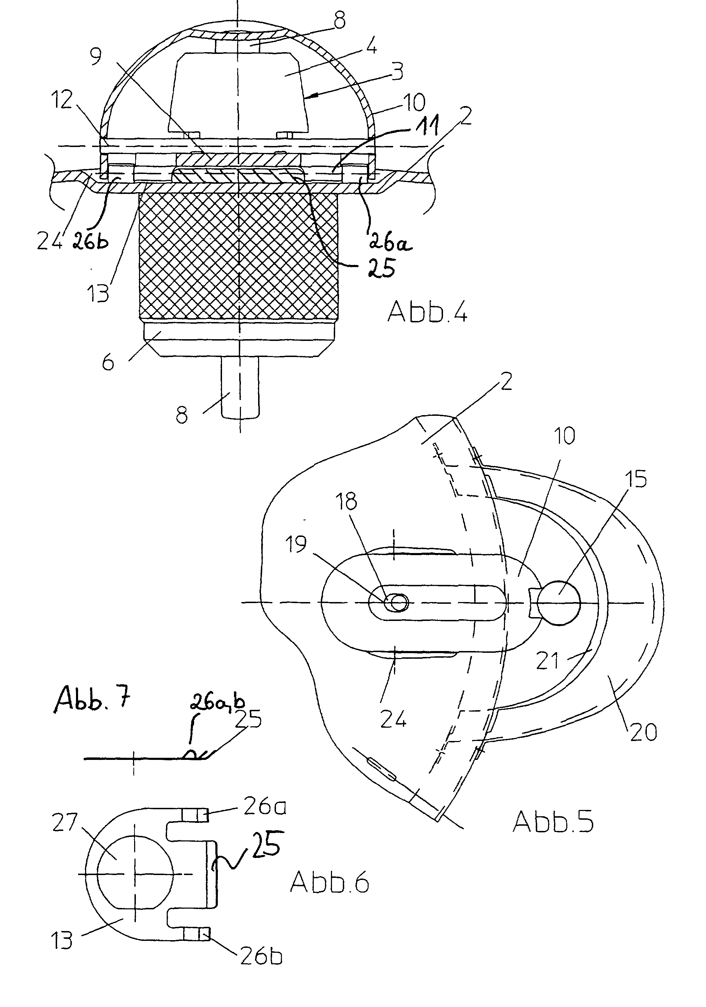

In Abb. 4 erkennt man die Lagerung der oberen Achse 12 an der Haube 10.

In der Draufsicht von Abb. 5 erkennt man die Ausformung der Haube 10, das Langloch 18 in der Haube 10 und das Griffstück 15.

Die Blattfeder 13 ist in Abb. 6 und 7 in einer Draufsicht bzw. Seitenansicht dargestellt. Diese weist die Ausnehmung 27 auf, durch die das Sicherheitsventil 3 hindurchgeführt ist sowie die drei Federbeine 25, 26 a, b, welche gegen das Betätigungsglied 9 drücken bzw. seitlich neben diesem liegen.

### Bezugszeichenliste:

- 1: Topf
- 2: Deckel
- 3: Sicherheitsventil
- 4: Ventiloberteil
- 5: Ventilkegel
- 6: Ventilunterteil
- 7: Ventilsitz
- 8: Druckanzeiger
- 9: Betätigungsglied
- 10: Haube
- 11: untere Achse
- 12: obere Achse
- 13: Blattfeder
- 14: Dampf sperre
- 15: Griffstück
- 16: Verriegelungsansatz
- 17: Ansatz
- 18: Ausnehmung
- 19: Lochkante
- 20: Deckelgriffteil
- 21: Topfgriffteil
- 22: Ventilkegelfeder
- 23: Druckanzeigerfeder
- 24: Ausprägung
- 25: Federbein, innen
- 26 a, b: Federbeine, außen
- 27: Ausnehmung der Blattfeder

## Patentansprüche

1. Dampfdruckkochtopf mit einem Bajonettverschluß zum Verschließen von Topf (1) und Deckel (2), mit einem im Deckel (2) angeordneten Sicherheitsventil (3) mit integriertem Druckanzeiger (8), und einem als Wippe ausgebildetem Betätigungsglied (9), das relativ zu dem Deckel (2) schwenkbar gelagert ist, wobei in einer ersten Position des Betätigungsgliedes (9) das Sicherheitsventil (3) geschlossen ist und gleichzeitig den Bajonettverschluß von Topf (1) und Deckel (2) verriegelt und somit ein Öffnen des Deckels (2) verhindert ist, das beim Schwenken aus der ersten Position in eine zweite Position das Sicherheitsventil (3) öffnet und beim Erreichen der zweiten Position die Verriegelung des Bajonettverschlusses von Topf (1) und Deckel (2) löst,
**dadurch gekennzeichnet, daß**
an dem Betätigungsglied (9) eine Haube befestigt ist, die so geformt ist, daß ihr freies Ende beim Verschwenken mit dem Druckanzeiger (8) des Sicherheitsventils (3) derart zusammenwirkt, daß bei einem Überdruck in dem Topf (1) ein Erreichen der zweiten Entriegelungsposition und damit ein Öffnen des Dampfdruckkochtopfes verhindert ist.

2. Dampfdruckkochtopf nach Anspruch 1, **dadurch gekennzeichnet, daß** das freie Ende der Haube eine Ausnehmung (18) hat, die bei Überdruck in der ersten Schließposition des Betätigungsgliedes von dem Druckanzeiger derart durchstoßen ist, daß der vom Deckelmittelpunkt aus innere Rand (19) der Ausnehmung (18) während des Schwenkvorgangs der ersten Schlußposition in die zweite Entriegelungsposition bei Überdruck an dem Druckanzeiger (8) anschlägt.

3. Dampfdruckkochtopf nach Anspruch 1 oder 2, **dadurch gekennzeichnet, daß** die Haube (10) das Betätigungsglied (9) und das Sicherheitsventil (3) abdeckt und so den aus dem Sicherheitsventil (3) entweichenden Dampf auffängt und daß die Haube (10) einen Auslaß für den Dampf aufweist.

4. Dampfdruckkochtopf nach Anspruch 3, **dadurch gekennzeichnet, daß** das Betätigungsglied (9) einen Ansatz (17) hat und daß die Haube (10) an dem Ansatz (17) und durch eine am Betätigungsglied (9) befestigte Achse (12) fixiert ist.

5. Dampfdruckkochtopf nach einem der Ansprüche 3 oder 4, **dadurch gekennzeichnet, daß** an der vom Deckelmittelpunkt außenliegenden Seite der Haube ein Griffstück (15) angebracht ist.

6. Dampfdruckkochtopf nach einem der Ansprüche 3 bis 5, **dadurch gekennzeichnet, daß** in der Haube eine Dampf sperre (14) angebracht ist.

7. Dampfdruckkochtopf nach einem der Ansprüche 1 bis 6, **dadurch gekennzeichnet, daß** zwischen Betätigungsglied (9) und Deckel (2) eine Feder wirkt.

8. Dampfdruckkochtopf nach Anspruch 7, **dadurch gekennzeichnet, daß** die Feder als Blattfeder (13) mit Ausnehmung ausgeführt ist und daß das Sicherheitsventil (3) durch Ausnehmung der Blattfeder (13) geführt ist und daß diese durch die Verschraubung des Sicherheitsventils (3) an dem Deckel (2) befestigt ist.

9. Dampfdruckkochtopf nach Anspruch 7 oder 8, **dadurch gekennzeichnet, daß** ein Federbein (25) der Blattfeder (13) das Betätigungsglied (9) in eine Ruhestellung drückt.

## Claims

1. A pressure cooker having a bayonet fixing for closing a pot (1) and a lid (2), a safety valve (3) arranged in the lid (2), with an integral pressure indicator (8), and an actuating member (9) formed as a rocker which is mounted so as to be pivotable relative to the lid (2), the safety valve (3) being closed in a first position of the actuating member (9) and simultaneously locking the bayonet fixing of the pot (1) and the lid (2), thereby preventing opening of the lid (2), and which, on pivoting from a first position into a second position, opens the safety valve (3) and, on reaching the second position, unlocks the bayonet fixing of the pot (1) and the lid (2), **characterised in that** a cover is fixed to the actuating member (9) and is formed so that, on pivoting, its free end cooperates with the pressure indicator (8) of the safety valve (3) in such a way that, in the event of excess pressure in the pot (1), the second, unlocking position cannot be reached and opening of the pressure cooker is thereby prevented.

2. A pressure cooker according to claim 1, **characterised in that** the free end of the cover has a recess (18) which, in the event of excess pressure in the first, locking position of the actuating member, is penetrated by the pressure indicator in such a way that the inner edge (19) of the recess (18), viewed from the centre of the lid, rests against the pressure indicator (8) during the process of pivoting from the first, locking position into the second, unlocking position in the event of excess pressure.

3. A pressure cooker according to claim 1 or 2, **characterised in that** the cover (10) covers the actuating member (9) and the safety valve (3) and thus collects the steam escaping from the safety valve (3), and **in that** the cover (10) has an outlet for the steam.

4. A pressure cooker according to claim 3, **characterised in that** the actuating member (9) has a projection (17) and **in that** the cover (10) is mounted on the projection (17) and is mounted by means of a pin (12) fixed to the actuating member (9).

5. A pressure cooker according to either one of claims 3 and 4, **characterised in that** a gripping part (15) is mounted on the side of the cover towards the outside of the centre of the lid.

6. A pressure cooker according to any one of claims 3 to 5, **characterised in that** a steam barrier (14) is mounted in the cover.

7. A pressure cooker according to any one of claims 1 to 6, **characterised in that** a spring acts between the actuating member (9) and the lid (2).

8. A pressure cooker according to claim 7, **characterised in that** the spring is formed as a leaf spring (13) provided with an opening, and **in that** the safety valve (3) is guided through the opening in the leaf spring (13) and **in that** the latter is fixed to the lid (2) by the screw connection of the safety valve (3).

9. A pressure cooker according to claim 7 or 8, **characterised in that** a spring leg (25) of the leaf spring (13) pushes the actuating member (9) into a rest position.

## Revendications

1. Marmite à pression de vapeur comportant une fermeture à baïonnette pour la fermeture de la marmite (1) et d'un couvercle (2), une soupape de sûreté (3) fixée dans le couvercle (2), un indicateur de pression intégré (8) et un élément d'actionnement (9) ayant la forme d'un bouton pivotant, qui est placé en pouvant pivoter par rapport au couvercle (2), la soupape de sûreté (3) étant fermée dans une première position de l'élément d'actionnement (9) et la fermeture à baïonnette de la marmite (1) et du couvercle (2) étant verrouillée simultanément et empêchant ainsi l'ouverture du couvercle (2), qui, lors du pivotement de la première position à une deuxième position, ouvre la soupape de sûreté (3) et, lorsque la deuxième position est atteinte, libère le verrouillage de la fermeture à baïonnette de la marmite (1) et du couvercle (2),
**caractérisé en ce que**
un capot est fixé à l'élément d'actionnement (9) et a une forme telle que son extrémité libre coopère lors du pivotement avec l'indicateur de pression (8) de la soupape de sûreté (3) de telle manière que, en cas de surpression dans la marmite (1), une obtention de la deuxième position de déverrouillage et donc une ouverture de la marmite de cuisson à pression de vapeur est empêchée.

2. Marmite à pression de vapeur selon la revendication 1, **caractérisée en ce que** l'extrémité libre du capot comporte un évidement (18) qui, en cas de surpression dans la première position de fermeture de l'élément d'actionnement, est poussé par l'indicateur de pression de telle sorte que le bord intérieur (19) de l'évidement (18) à partir du centre du couvercle pendant le pivotement de la première position de fermeture à la deuxième position de déverrouillage bute sur l'indicateur de pression (8) en cas de surpression.

3. Marmite à pression de vapeur selon la revendication 1 ou 2, **caractérisée en ce que** le capot (10) recouvre l'élément d'actionnement (9) et la soupape de sûreté (3) et, ainsi, intercepte la vapeur s'échappant de la soupape de sûreté (3) et **en ce que** le capot (10) comporte une évacuation pour la vapeur.

4. Marmite à pression de vapeur selon la revendication 3, **caractérisée en ce que** l'élément d'actionnement (9) comporte une pièce rapportée (17) et **en ce que** le capot (10) est fixé à la pièce rapportée (17) et par un axe (12) fixé à l'élément d'actionnement (9).

5. Marmite à pression de vapeur selon la revendication 3 ou 4, **caractérisée en ce qu'**une poignée (15) est fixée au côté du capot situé à l'extérieur du centre du couvercle.

6. Marmite à pression de vapeur selon l'une des revendications 3 à 5, **caractérisée en ce qu'**un piège à vapeur (14) est placé dans le capot.

7. Marmite à pression de vapeur selon l'une des revendications 1 à 6, **caractérisée en ce qu'**un ressort agit entre l'élément d'actionnement (9) et le couvercle (2).

8. Marmite à pression de vapeur selon la revendication 7, **caractérisée en ce que** le ressort est exécuté sous forme d'un ressort à lames (13) comportant un évidement, **en ce que** la soupape de sûreté (3) traverse l'évidement du ressort à lames (13) et **en ce que** celui-ci est fixé par vissage de la soupape de sûreté (3) au couvercle (2).

9. Marmite à pression de vapeur selon la revendication 7 ou 8, **caractérisée en ce qu'**une branche de ressort (25) du ressort à lames (13) pousse l'élément d'actionnement (9) dans une position de repos.
